(19) Europäisches Patentamt
European Patent Office
Office européen des brevets

(11) **EP 3 573 017 A1**

(12) **EUROPEAN PATENT APPLICATION**
published in accordance with Art. 153(4) EPC

(43) Date of publication:
**27.11.2019 Bulletin 2019/48**

(51) Int Cl.:
*G06T 1/00* (2006.01)     *G06F 3/0488* (2013.01)

(21) Application number: **18741374.5**

(22) Date of filing: **16.01.2018**

(86) International application number:
**PCT/JP2018/000940**

(87) International publication number:
**WO 2018/135459 (26.07.2018 Gazette 2018/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **19.01.2017 JP 2017007706**

(71) Applicant: **FUJITSU CLIENT COMPUTING LIMITED Kawasaki-shi, Kanagawa 2118588 (JP)**

(72) Inventors:
• **KAWAHARA, Masanori**
  **Kawasaki-shi**
  **Kanagawa 211-8588 (JP)**

• **SUZUKI, Makoto**
  **Kawasaki-shi**
  **Kanagawa 211-8588 (JP)**
• **HASADA, Rie**
  **Kawasaki-shi**
  **Kanagawa 211-8588 (JP)**
• **ABIKO, Yukihiro**
  **Kawasaki-shi**
  **Kanagawa 211-8588 (JP)**
• **SEMBA, Satoshi**
  **Kawasaki-shi**
  **Kanagawa 211-8588 (JP)**

(74) Representative: **Haseltine Lake Kempner LLP**
**Lincoln House, 5th Floor**
**300 High Holborn**
**London WC1V 7JH (GB)**

(54) **TERMINAL DEVICE, DISPLAY POSITION CONTROL PROGRAM, AND DISPLAY POSITION CONTROL METHOD**

(57) Provided is a terminal device that has a calculation unit that: references a storage unit that stores information on the size of a display that is being used for display and information on a reference point for displaying a specific screen; and, from a preset display position for the specific screen, calculates a display position for the specific screen that conforms to the information on the size of the display, the information on the reference point, and information on the resolution of the display that is being used for display.

FIG. 2

**Description**

[Technical Field]

The present invention relates to a terminal device, a display position control program and a display position control method.

[Background Art]

Among portable terminals such as tablet terminals and the like, there are devices that are equipped with a biometric authentication function (see, for example, Patent Document 1). Patent Document 1 discloses a terminal device in which, instead of having a camera that can read biometric information at once, a line scan camera is provided on a lateral side of a display, and the palm of the hand is moved over the line scan camera to read the biometric information. As a result thereof, space is saved.

In Patent Document 1, in order to reduce biometric information reading errors when moving the palm of the hand, touch areas indicating the positions at which the fingers are to be placed are presented on the display, and the fingers are moved in accordance with the touch areas, thereby causing the palm of the hand to pass over the line scan camera and allowing biometric information to be acquired from the palm of the hand.

[Related Literature]

[Patent Literature]

[Patent Document 1]
Japanese Unexamined Patent Application, First Publication No. 2016-212636

[Summary of Invention]

[Technical Problem]

However, in Patent Document 1, there are cases in which the touch areas cannot be presented at locations at which the distances to the position (reference point) of the camera provided in the terminal device are the same for all models having displays of different sizes, such as 10.1 inches or 13.3 inches. For this reason, there are cases in which biometric information reading errors occur depending on the size of the display.

Therefore, according to one aspect, a purpose of the present invention is to present a specific screen at the same position, relative to a reference point, in terminal devices having different display sizes.

[Solution to Problem]

In one embodiment, the present invention provides a terminal device comprising a computation unit that references a storage unit storing information including a size of a display being used and a reference point for presenting a specific screen, and that computes, from a preset display position of the specific screen, a display position of the specific screen adapted to each of information including the size of the display, the reference point and a resolution of the display being used.

[Advantageous Effects of Invention]

According to one aspect, the present invention can present a specific screen at the same position, relative to a reference point, in terminal devices having different display sizes.

[Brief Description of Drawings]

Fig. 1 is a diagram illustrating an example of a guidance screen of a terminal device according to one embodiment.
Fig. 2 is a diagram illustrating an example of a guidance screen presented on displays of different sizes.
Fig. 3 is a diagram illustrating an example of the hardware structure of a terminal device according to one embodiment.
Fig. 4 is a diagram illustrating an example of the functional structure of a terminal device according to one embodiment.

Fig. 5 is a diagram illustrating an example of an internal display information table according to one embodiment.

Fig. 6 is a diagram illustrating an example of a guide position information table according to one embodiment.

Fig. 7 is a diagram illustrating an example of the positioning (in millimeters) of a guidance screen according to one embodiment.

Fig. 8 is a diagram illustrating an example of the positioning (in pixels) of a guidance screen according to one embodiment.

Fig. 9 is a diagram illustrating an example of the functional structure of a biometric authentication device according to one embodiment.

Fig. 10 is a diagram for explaining a reading operation using a guidance screen according to one embodiment.

Fig. 11 is a diagram for explaining a reading operation using a guidance screen according to one embodiment.

Fig. 12 is a diagram for explaining a reading operation using a guidance screen according to one embodiment.

Fig. 13 is a flow chart illustrating an example of a BIOS procedure according to one embodiment.

Fig. 14 is a flow chart illustrating an example of a display position control process according to one embodiment.

Figs. 15A and 15B are diagrams for explaining full-screen display and partial screen display according to one embodiment.

[Description of Embodiments]

Hereinafter, embodiments of the present invention will be explained with reference to the attached drawings. In the present specification and drawings, structural elements having substantially the same functional structure will be indicated by appending the same reference signs, thereby eliminating redundant explanations.

[Biometric Authentication]

In biometric authentication, personal verification is performed by using characteristic biometric information that is different in each individual, such as fingerprints, the face, the palms of the hands, the irises and veins. For example, in palm authentication, biometric authentication is performed by using biometric information such as handprints, hand shapes and veins in the palms. In the following explanation, an example of palm authentication in a terminal device equipped with a biometric authentication function, such as a tablet terminal, will be explained, but the biometric authentication need not be limited to palm authentication.

The terminal device according to one embodiment of the present invention may have a biometric information reading device and a biometric authentication device installed therein. The biometric information reading device may be included in the biometric authentication device.

Terminal devices include PCs (personal computers), tablet terminals, smartphones and portable terminals. In the examples indicated below, the terminal device 1 is a portable terminal such as a tablet terminal or a smartphone.

[Guidance Screen]

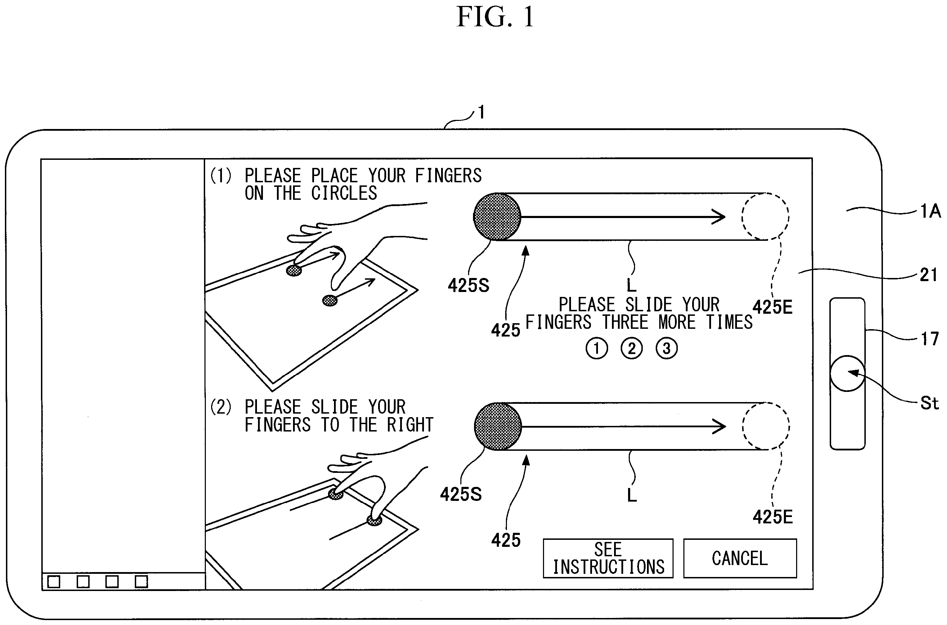

First, an example of a guidance screen in the terminal device 1 according to the present embodiment will be explained with reference to Fig. 1. The terminal device 1 that is equipped with a biometric authentication function captures an image of a living body by means of, for example, a camera 17 provided in a housing 1A. In this example, in the terminal device 1, an internal display 21 having a touch panel laminated thereon is provided on the upper surface of a housing 1A having a substantially rectangular shape in plan view, and a camera 17 is provided at a position at the center of a lateral side of the housing 1A surrounding the internal display 21. However, the position of the camera 17 is not limited thereto, and it may be provided at any position on the housing 1A. In the terminal device 1, space is saved by moving the palm of the hand over the camera 17 to read biometric information.

In order to reduce biometric information reading errors when moving the palm of the hand, finger touch areas 425 are presented on the internal display 21. The touch areas 425 that are presented on the internal display 21 include circular starting guide buttons 425S indicating starting points at which the fingers are to be placed, and circular end guide buttons 425E indicating end points at which the fingers are to be placed. Additionally, the display of the touch areas 425 includes guide lines L over which the fingers are to be slid from the starting guide buttons 425S to the end guide buttons 425E, and arrows indicating the directions in which the fingers are to be slid. In the presented example, by moving two fingers from the starting guide buttons 425S to the end guide buttons 425E in accordance with the two touch areas 425, the palm of the hand is made to pass over the camera 17, allowing palm biometric information to be acquired.

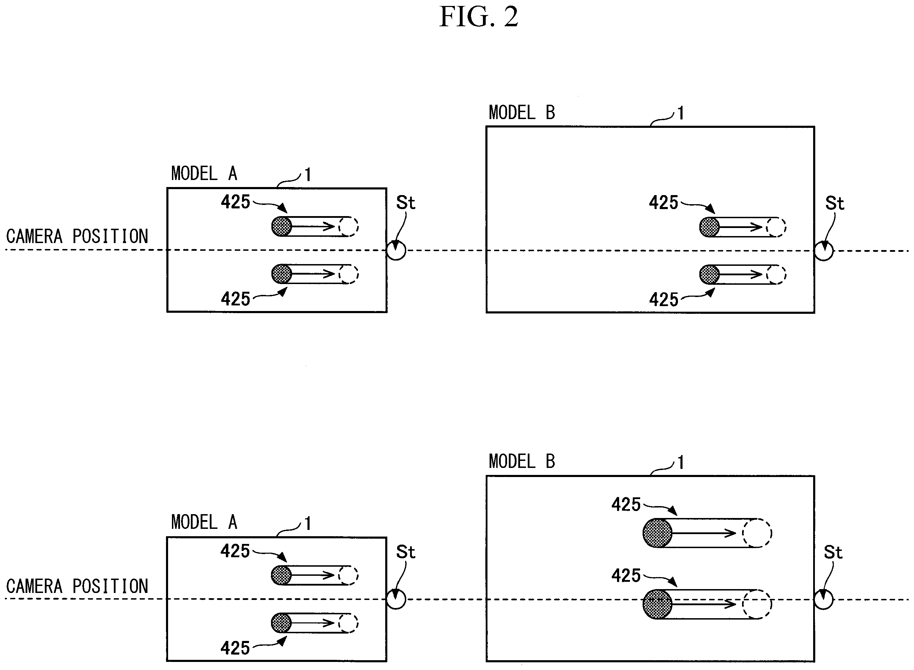

As shown in Fig. 2, for example, there is a difference in the physical sizes of the display between a model A of a terminal device 1 having a 10.1 inch display size and a model B of a terminal device 1 having a 13.3 inch display size. In this case, as shown on the upper side of Fig. 2, for both terminal devices 1 with different display sizes, it is ideal to present the touch areas 425 at locations that are the same distance from the positions of reference points St at which the cameras in the terminal devices 1 are provided. By doing so, it is possible to reduce biometric information reading errors.

However, in actuality, as shown on the lower side of Fig. 2, the difference in the physical sizes of the displays causes the touch areas 425 to be presented at locations that are different distances from the positions of the reference points St at which the cameras in the terminal devices 1 are provided. In this case, there are cases in which the touch areas 425 are not presented at appropriate positions, thereby increasing biometric information reading errors.

Therefore, in the terminal device 1 according to the present embodiment, the touch areas 425 for guiding biometric information reading operations are presented, on terminal devices 1 having internal displays 21 of different sizes, at the same positions relative to the reference points St at which the cameras are provided. The reading operation in this case refers to a touch-and-slide movement of a user's fingers in accordance with guide displays. Hereinafter, the structure of a terminal device 1 according to the present embodiment and the control of the display positions of the touch areas 425 by the terminal device 1 will be explained.

[Hardware Structure]

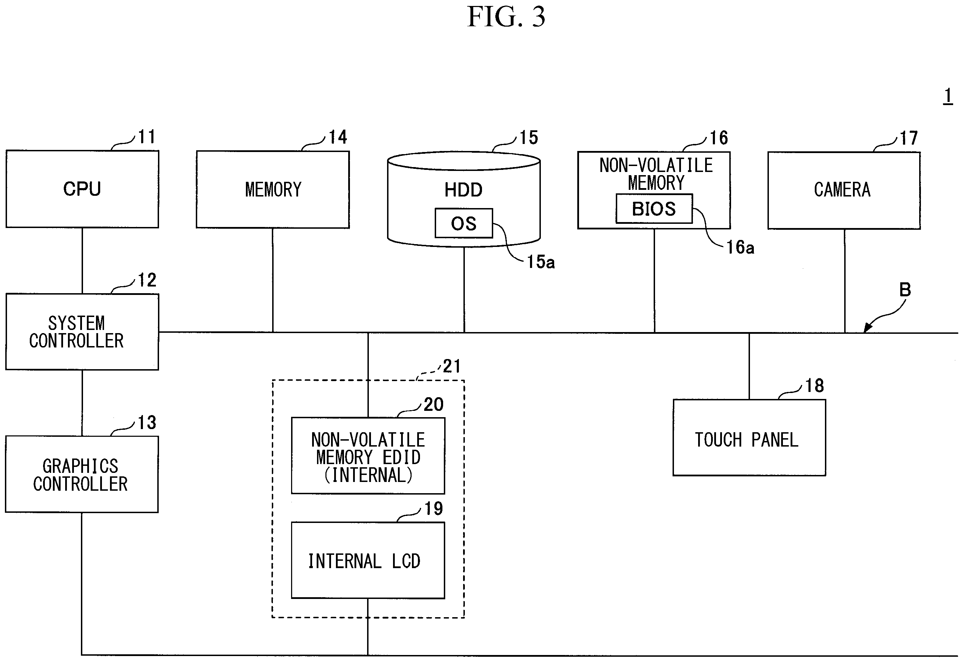

First, an example of the hardware structure of the terminal device 1 according to the present embodiment will be explained with reference to Fig. 3. The terminal device 1 has a CPU (Central Processing Unit) 11, a system controller 12, a graphics controller 13, a memory 14, an HDD (Hard Disk Drive) 15, a non-volatile memory 16, a camera 17, a touch panel 18 and an internal display 21.

If the terminal device 1 has a communication function, it may further have a well-known communication interface for transmitting and receiving signals. Additionally, if the terminal device 1 has the function of connecting to an external network such as the internet, it may further have a well-known external interface.

The system controller 12 controls the entire terminal device 1. The system controller 12 is connected to a CPU 11. Additionally, the system controller 12 is connected, via a bus B, to the graphics controller 13, the memory 14, the HDD 15, the non-volatile memory 16, the camera 17, the touch panel 18 and the internal display 21. Furthermore, an expansion slot such as, for example, a PCI Express slot or a PCI slot, may be connected to the bus B.

The CPU 11 can run computer programs, including an authentication processing program, to implement various functions of the terminal device 1 including biometric authentication. Additionally, the CPU 11 can run a display position control program to implement a function for controlling the display positions of the touch areas 425.

The graphics controller 13 controls the internal display 21 in accordance with instructions from the CPU 11 via the system controller 12, and presents various screens, such as presenting the touch areas 425.

The memory 14 may store computer programs, including an authentication processing program and a display position control program, to be run by the CPU 11, and various types of data. The memory 14 may comprise, for example, an SDRAM (Synchronous Dynamic Random Access Memory). The memory 14 is an example of a storage unit.

The HDD 15 stores various programs and various types of data. An OS 15a is contained in the HDD 15. Additionally, an application for controlling the display positions of the touch areas 425 is installed in the HDD 15.

A BIOS (Basic Input/Output System) 16a is contained in the non-volatile memory 16. The BIOS 16a runs a POST (Power-On Self Test, a self-diagnosis test) when the terminal device 1 is booted or rebooted by turning on a power supply. The POST includes device (peripheral device) initialization processes. When an initialization process is executed for a device, that device enters an active state. The non-volatile memory 16 may comprise, for example, an EEPROM (Electrically Erasable Programmable Read-Only Memory).

The camera 17 captures images of the palm of the hand as it moves above the camera 17 when the user touches the touch areas 425 on the internal display 21 and performs finger operations in accordance with guidance in the touch areas 425. The touch panel 18 is laminated onto the internal display 21 and detects the coordinates of positions touched by the user's fingers.

The camera 17 is an example of a biometric information reading device. The biometric information reading device may be formed from a camera 17 that captures images of, for example, a palm print, a hand shape, the face or the like. Additionally, the biometric information reading device may be formed from a near-infrared sensor (or near-infrared camera) including an image sensor (or camera), having sensitivity in the near-infrared wavelength region, for capturing images of, for example, the veins on the palm, the veins on the fingers, the irises or the like, and a near-infrared illumination light source. Additionally, the biometric information reading device may include both a camera having sensitivity in a wavelength region other than the near-infrared wavelength region, and a near-infrared sensor.

The internal display 21 is a display that has an internal LCD (Liquid Crystal Display) 19 and a non-volatile memory 20, and that is internally provided in the terminal device 1. In addition to symbols, diagrams, messages and the like, the internal display 21 presents touch areas 425 and the like, including touch position starting points and end points indicating user finger operation positions, user finger movement directions and touch position movement instructions. The non-volatile memory 20 stores information (Extended Display Identification Data, hereinafter referred to as "EDID information") specific to the internal LCD 19. The non-volatile memory 20 may comprise a ROM.

[Functional Structure]

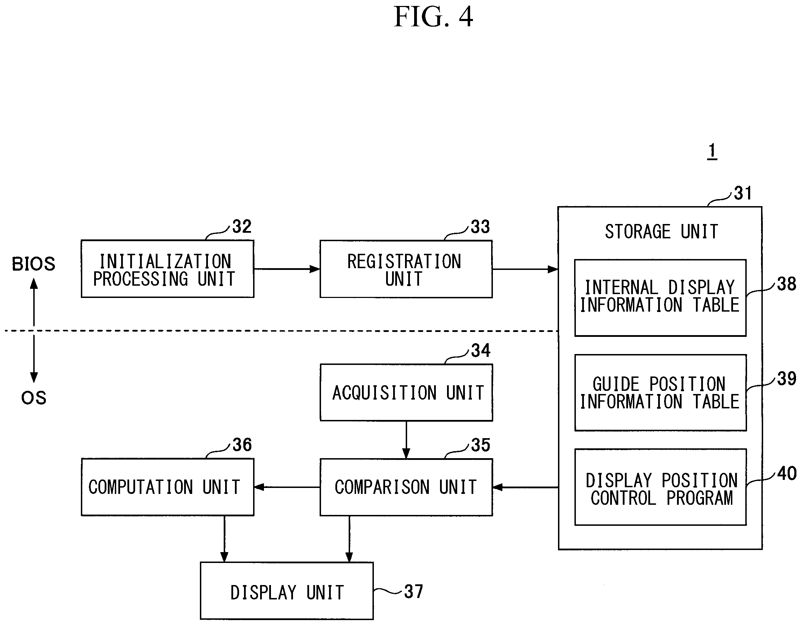

Next, an example of the functional structure of the terminal device 1 according to the present embodiment will be explained with reference to Fig. 4. The terminal device 1 has a storage unit 31, an initialization processing unit 32, a registration unit 33, an acquisition unit 34, a comparison unit 35, a computation unit 36 and a display unit 37.

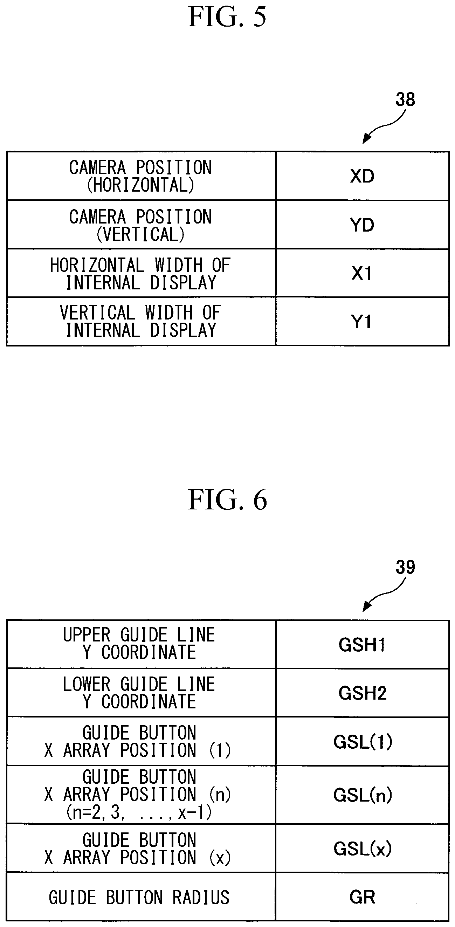

The storage unit 31 has an internal display information table 38 and a guide position information table 39. An example of the internal display information table 38 is shown in Fig. 5, and an example of the guide position information table 39 is shown in Fig. 6.

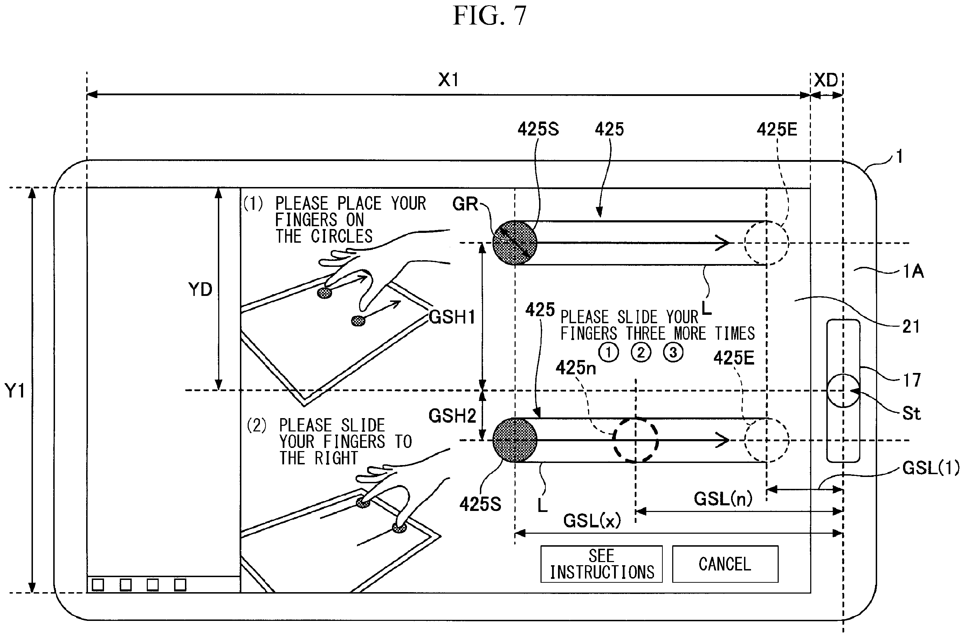

The internal display information table 38 shown in Fig. 5 stores information including the camera position (horizontal) XD, the camera position (vertical) YD, and the horizontal width X1 and vertical width Y1 of the internal display. Fig. 7 illustrates, in millimeter units, an example of the physical screen size of the internal display of the terminal device 1 and the arrangement of guide buttons on the screen, stored in the internal display information table 38. In the terminal device 1, the horizontal distance from the reference point St of the camera 17 to the boundary between the right edge of the internal display 21 and the housing 1A is indicated by the camera position (horizontal) XD. Additionally, the vertical distance from the reference point St of the camera 17 to the boundary between the upper edge of the internal display 21 and the housing 1A is indicated by the camera position (vertical) YD. In other words, (XD, YD) indicates the relative position of the camera 17 (hereinafter referred to as "relative position (XD, YD) of the camera 17") from the internal display 21. The relative position (XD, YD) of the camera 17 is a predetermined fixed value as a distance allowing palm authentication. The relative position (XD, YD) of the camera 17 is an example of the position of the biometric reading device. Further, the relative position (XD, YD) of the camera 17 is an example of a reference point for displaying a specific screen. An example of a specific screen is one including the touch areas 425.

Fig. 7 also indicates the physical horizontal width and vertical width of the internal display 21 as X1 and Y1. In other words, (X1, Y1) indicates the physical screen size (hereinafter referred to as "physical screen size (X1, Y1)") of the internal display 21. The physical screen size (X1, Y1) is an example of the display size.

The relative position (XD, YD) of the camera 17 and the physical screen size (X1, Y1) change depending on the type of terminal device 1. Therefore, in the present embodiment, during a BIOS process that is executed when the terminal device 1 is booted or rebooted, the registration unit 33 indicated in Fig. 4 saves, in the memory 14, the physical screen size (X1, Y1) and the relative position (XD, YD) of the camera 17 stored in the non-volatile memory 16. As a result thereof, the correct physical screen size (X1, Y1) of the terminal device and the relative position (XD, YD) of the camera 17 are saved to the internal display information table 38 in the memory 14 each time the terminal device 1 is booted or rebooted.

The registration unit 33 may acquire the physical screen size (X1, Y1) from the EDID information stored in the non-volatile memory 20 in the internal display 21, and store the physical screen size (X1, Y1) in the memory 14. The registration unit 33 is, for example, implemented by means of the BIOS 16a.

The initialization processing unit 32 is similarly implemented, for example, by means of the BIOS 16a. The initialization processing unit 32 runs a POST process when the terminal device 1 is booted or rebooted by turning the power supply on, and performs a device initialization process. The processing in the initialization processing unit 32 and the registration unit 33 is included in the BIOS process performed by the BIOS 16a.

During a POST process in the terminal device 1, it is common to use only the internal display 21 for display even if multiple displays are connected to the terminal device 1. For this reason, the registration unit 33 is able to acquire EDID information from the internal display 21 by using a protocol called GOP (Graphics Output Protocol). As a result thereof, it is possible to acquire the physical screen size (X1, Y1) of the internal display 21, which is included in the EDID information.

As explained above, during the BIOS process that is carried out each time the terminal device 1 is booted or rebooted, the relative position (XD, YD) of the camera 17 and the physical screen size (X1, Y1) are acquired from the non-volatile memory 16 and saved in the memory 14. As a result thereof, an application that is operated on the OS 15a when control is transferred from the BIOS 16a to the OS 15a can access the memory 14 and acquire this information (XD, YD) and (X1, Y1), which is specific to each terminal device 1.

As the memory region used in the memory 14, a candidate is a memory region defined by a System Management BIOS (SMBIOS). In the present embodiment, it will be assumed that the relative position (XD, YD) of the camera 17 and the physical screen size (X1, Y1) are saved to a memory region defined by the SMBIOS, and the method for writing in and reading from the memory region follow the SMBIOS specifications, so the details will be omitted.

The guide position information table 39 in Fig. 4 stores offset values, from the camera 17, of circular guide buttons (guide buttons including the starting guide buttons 425S, the end guide buttons 425E and the guide buttons 425n). The guide buttons 425n are updated when certain points are passed, so there are array coordinates between the starting guide buttons 425S indicating the starting positions and the end guide buttons 425E indicating the end positions.

Specifically, the guide position information table 39 shown in Fig. 6 stores an upper guide line Y coordinate GSH1 and a lower guide line Y coordinate GSH2. Additionally, the guide position information table 39 stores information including the guide button X array position (1) GSL(1), the guide button X array positions (n) (n = 2, 3, ..., x - 1) GSL(n), the guide button X array position (x) GSL(x) and the diameter GR of the guide buttons. The guide position information table 39 is stored, for example, in the HDD 15.

In the terminal device 1 in Fig. 7, the upper guide line Y coordinate GSH1 indicating the Y coordinate of the upper touch area 425 with respect to the reference point St, the lower guide line Y coordinate GSH2 indicating the Y coordinate of the lower touch area 425 with respect to the reference point St, and the diameter GR of the guide buttons are shown. Additionally, in the terminal device 1 in Fig. 7, the guide button X array position (1) GSL(1), the guide button X array position (n) GSL(n) and the guide button X array position (x) GSL(x), which are arrayed on the X axis of a guide line L, are shown. As one example of the guide buttons, Fig. 7 shows starting guide buttons 425S, end guide buttons 425E and guide buttons 425n having the diameter GR. As mentioned above, the guide position information table 39 stores the preset display positions of touch areas 425 for guiding biometric information reading operations.

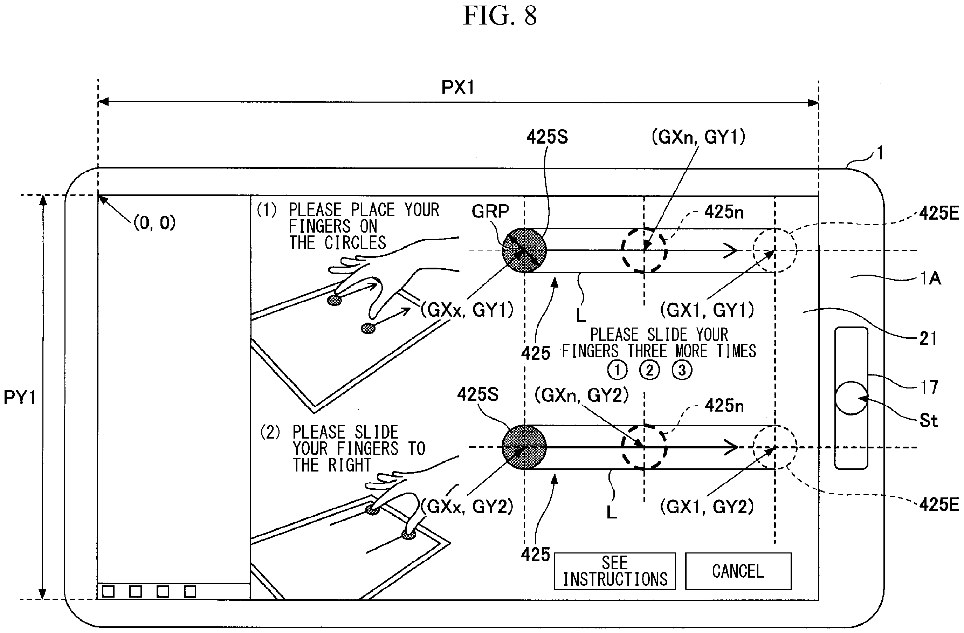

In Fig. 8, an example of the arrangement of guide buttons on the screen of the terminal device 1 is shown in units of pixels. (PX1, PY1) is the screen resolution. Assuming that the size (mm) per pixel is (UX1 × UY1), then UX1 = X1/PX1 and UY1 = Y1/PY1.

The computation unit 36 converts the millimeter positions of the guide buttons, i.e., the starting guide buttons 425S, the end guide buttons 425E and the guide buttons 425n to positions in pixels. The computation unit 36 computes the positions (in pixels), on the X axis (horizontal axis), of GX1, GXn and GXx on the touch areas 425, when the upper left vertex of the internal display 21 shown in Fig. 8 is defined as being (0, 0), using the equations indicated below.

$$GX1 = PX1 - (GSL(1) - XD)/UX1$$

$$GXn = PX1 - (GSL(n) - XD)/UX1 \ (n = 2, ..., x - 1)$$

$$GXx = PX1 - (GSL(x) - XD)/UX1$$

Additionally, the computation unit 36 computes the positions (in pixels), on the Y axis (vertical axis), of GY1, GY2 on the two touch areas 425 shown in Fig. 8, and the radius (in pixels) of the guide buttons, using the equations indicated below.

$$GY1 = (YD - GSH1)/UY1$$

$$GY2 = (YD + GSH2)/UY1$$

$$GRP = GR/UX1$$

From the above, the computation unit 36 uses the preset display positions of the touch areas 425 for guiding the biometric information reading operations to compute display positions of the touch areas 425 adapted to the physical screen size (X1, Y1), the relative position (XD, YD) of the camera 17 and the resolution (PX1, PY1) of the internal display 21. In other words, the computation unit 36 uses the resolution of the internal display 21, the size of the internal display 21 and the relative position of the internal display 21 with respect to the camera 17 to convert the coordinates of the preset display positions of the touch areas 425 from millimeters to pixels. The display unit 37 presents the touch areas 425 at the coordinate-converted display positions. As a result thereof, the touch areas 425 can be presented at positions that are appropriate for the camera 17 to capture images of the palm of the hand, and the camera 17 can capture images of the palm of the hand enabling biometric authentication.

Returning to Fig. 4, the acquisition unit 34 acquires the information on the relative position (XD, YD) of the camera 17 and the physical screen size (X1, Y1) from the memory 14. The acquisition unit 34 acquires the size (X2, Y2) of the display area of the screen being presented on the internal display 21, and resolution information for the internal display 21 that is being used.

The comparison unit 35 compares the acquired physical screen size (X1, Y1) with the size (X2, Y2) of the screen display area. If, as a result of the comparison, the physical screen size (X1, Y1) differs from the size (X2, Y2) of the screen display area, then the display unit 37 presents a screen instructing that the display range of the internal display 21 that is being used should be set to be the full screen. If, as a result of the comparison, the physical screen size (X1, Y1) is the same as the size (X2, Y2) of the screen display area, then the display unit 37 presents the touch areas 425 at the computed (coordinate-converted) touch area display positions.

The acquisition unit 34, the comparison unit 35 and the computation unit 36 can be implemented, for example, by means of processes run on the CPU 11 by a display position control program 40 stored in the storage unit 31. The display unit 37 may, for example, be implemented by means of an internal LCD 19 in the internal display 21.

Fig. 4 is a block diagram focusing on the functions, and a processor for running software for the respective units indicated by these functional blocks is hardware. The storage unit 31 may form a memory region inside the terminal device 1 or a database that can be connected to the terminal device 1 via a network. However, the internal display information table 38 is saved to the non-volatile memory 16 or the non-volatile memory 20 in the terminal device 1, and stored in the memory 14.

[Biometric Authentication Device]

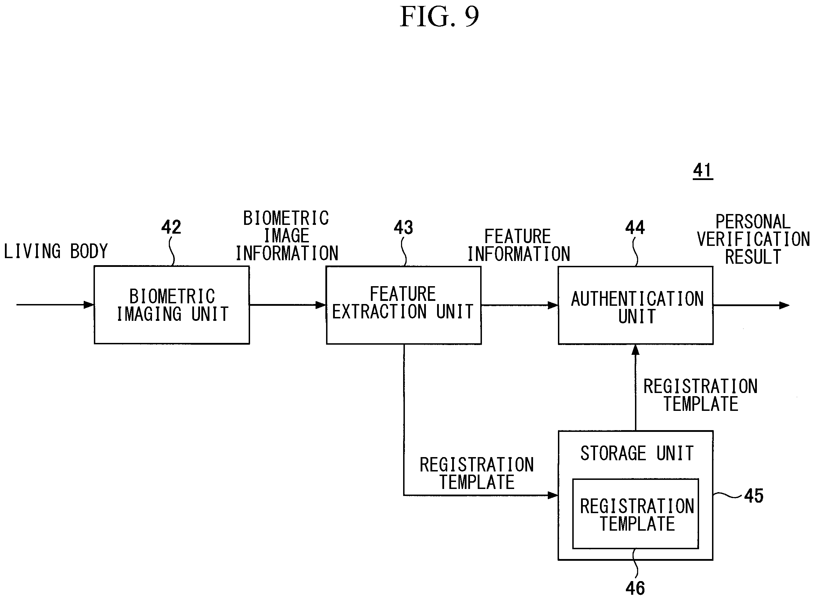

An example of the functional structure of a biometric authentication device 41 according to the present embodiment installed in the terminal device 1 according to the present embodiment will be explained with reference to Fig. 9. The biometric authentication device 41 according to the present embodiment has a biometric imaging unit 42, a feature extraction unit 43, an authentication unit 44 and a storage unit 45.

The biometric imaging unit 42 captures images containing user biometric information. The biometric imaging unit 42 may be implemented, for example, by means of a camera 17. The feature extraction unit 43 extracts feature information from the user biometric information images captured by the biometric imaging unit 42. The authentication unit 44 performs biometric authentication of the user by means of the extracted feature information.

In the biometric authentication process executed by the biometric authentication device 41, the authentication unit 44 compares and collates feature information that has been pre-registered in the storage unit 45 with the feature information extracted by the feature extraction unit 43 from the user biometric information captured by the biometric imaging unit 42 during personal verification. The authentication unit 44 determines whether or not the comparison/collation results indicate a match to within a predetermined threshold value range, and outputs a personal verification result. If the comparison/collation results indicate a match, then the authentication unit 44 determines that biometric authentication has succeeded and outputs a personal verification result indicating that the user is genuine.

The pre-registered feature information is sometimes called, for example, a registration template 46. In the registration process for the registration template, as in the case of the above-mentioned biometric authentication process, the feature extraction unit 43 extracts feature information from the user biometric information images captured by the biometric imaging unit 42. Furthermore, the registration template is registered by supplying the storage unit 45 with feature information extracted in this manner. The registration template registered in the storage unit 45 may be feature information that has been processed.

In the example in Fig. 9, the storage unit 45 is provided inside the biometric authentication device 41, but it may be contained in a storage unit outside the biometric authentication device 41. For example, an HDD (Hard Disk Drive), a flash memory or the like, which are examples of the storage unit 45, may be externally connected to the biometric authentication device 41 via an interface such as a USB (Universal Serial Bus). Additionally, the storage unit 45 may form a database that can be connected to the biometric authentication device 41 via a network.

In the present embodiment, the functions of the feature extraction unit 43 and the authentication unit 44 in the biometric authentication device 41 are executed by a program. The above-mentioned authentication process is implemented in the terminal device 1 by running said program, which is installed in the terminal device 1, by means of the CPU 11.

[Biometric Information Reading Operation]

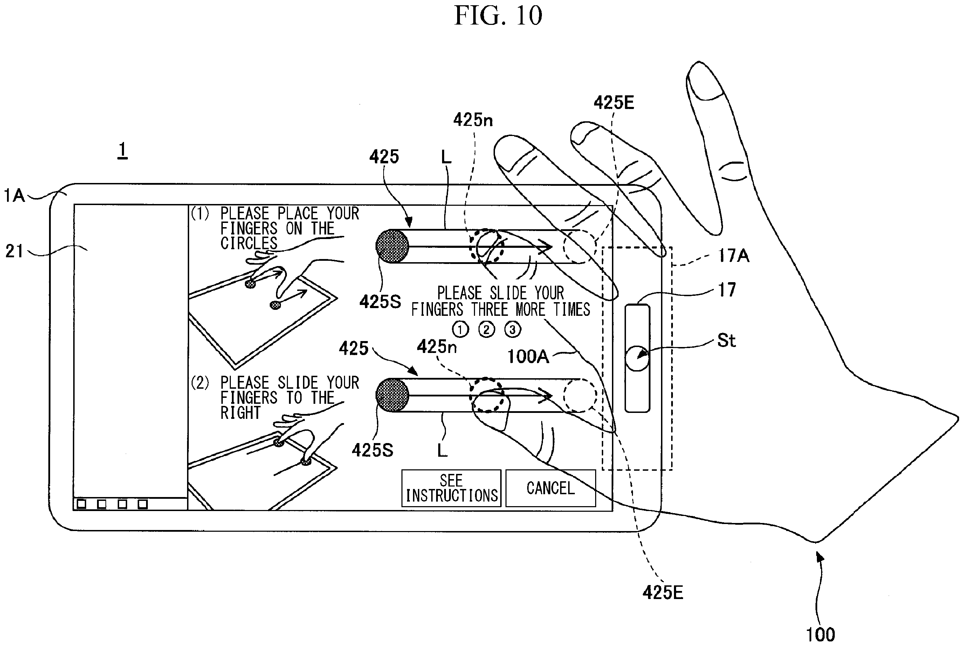

Next, an example of a biometric information reading operation will be explained with reference to Fig. 10 to Fig. 12.

Fig. 10 to Fig. 12 are diagrams for explaining examples of a biometric information reading operation. Fig. 10 illustrates a plan view of a terminal device 1 operated by a user 100. In the example illustrated in Fig. 10, two touch areas 425, each including a guide line L, a starting guide button 425S, a guide button 425n and an end guide button 425E, are presented on the internal display 21 of the terminal device 1.

The user 100 simultaneously swipes the tips of the fingers (in this example, the thumb and the index finger) across the two touch areas 425. During that time, the camera 17 captures images of the palm 100A within an imaging range 17A. When the user 100 performs the operation to simultaneously touch and slide multiple fingertips across the touch areas 425, the angle of the palm 100A with respect to the internal display 21 remains stable and does not largely change while the multiple fingertips are simultaneously sliding over the internal display 21. For this reason, it is possible to reduce relative angular deviation between the terminal device 1 and the hand of the user 100, thereby allowing the palm 100A to be stably imaged by the camera 17.

Additionally, in the present embodiment, in terminal devices 1 in which the internal displays 21 are of different sizes, the touch areas 425 indicating the biometric information reading operations are presented at the same positions relative to a reference point St on the camera 17. For this reason, in the case of each of the terminal devices 1 having internal displays 21 of different sizes, the relative angular deviation between the terminal device 1 and the hand of the user 100 can be reduced and the palm 100A can be stably imaged by the camera 17.

In Fig. 10, the two guide lines L of the touch areas 425 are presented so as to each be continuous on the internal display 21, but they may be presented in dashed form.

In this example, the display unit 37 presents, on the internal display 21, in accordance with control by the CPU 11, a starting guide button 425S indicating the operation starting position, a guide line L and an end guide button 425E indicating the operation end position for each touch area 425. At this time, it is possible to present the guide line L, the starting guide button 425S, the guide button 425n and the end guide button 425E differently for a touch area 425 in which the operation has been completed and a touch area 425 for which the operation has not been completed, by changing the darkness or lightness of the colors or the types of lines.

In this example, as illustrated in Fig. 10, the guide buttons 425n indicating the points being operated are shown at the centers of the guide lines L. The display unit 37 indicates the movement direction using arrows. A guide button 425n indicating a point, on an array on a guide line L, through which a finger has passed due to the operation by the user 100 may be presented with dark hatching. Additionally, a portion of a guide line L over which the user 100 has not performed the operation may be presented with light hatching. Thereafter, in a similar manner, each time the fingers of the user 100 performing the operation pass over one of n (n = 2, 3, ..., x - 1) points arrayed on the guide line L, the guide buttons 425n that have passed that point may be presented in darker hatching and guide buttons 425n that have not passed that point may be presented in lighter hatching.

In one of the touch areas 425, the imaging target of the biometric imaging unit 42 may be set to be a position on the palm 100A towards the wrist of the user 100, and in the other touch area 425, the imaging target of the biometric imaging unit 42 may be set to be a position on the palm 100A towards the fingertips of the user 100.

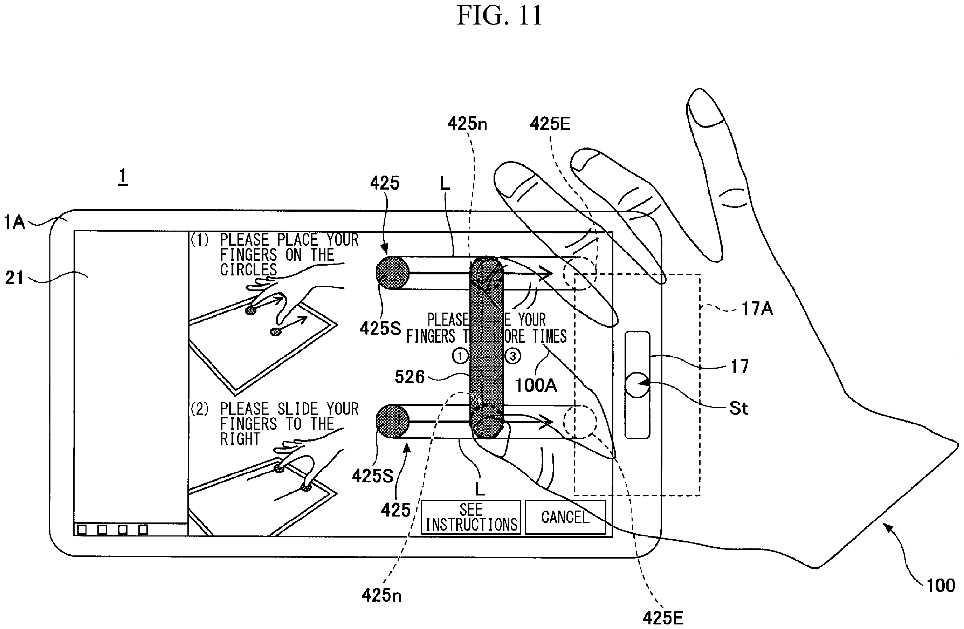

As in the example illustrated in Fig. 11, it is possible to present a single operation indicator 526 as a common guide for multiple touch areas 425. The single operation indicator 526 is in the shape of a bar. In this case also, it is possible to stably image the palm 100A by means of the camera 17. In this case, the display of the guidance screen for guiding the biometric information reading operation may comprise multiple touch areas 425 and a single operation indicator 526.

The user 100 performs a touch operation along the guide lines L while observing the touch areas 425. At this time, according to the display of the guidance screen illustrated in Fig. 11, it is possible to show the operation indicator 526 in the form of a bar that can be seen between the fingers of the user 100, thereby facilitating finger touch operations along the touch areas 425. The shape and the display format of the operation indicator 526 joining the two touch areas 425 into one are not particularly limited.

It is possible to arrange the touch areas 425 illustrated in Fig. 10 and 11 such that, for example, the guide displays in a touch area 425 are updated each time one of the fingers used by the user 100 to perform the operation passes n (n = 2, 3, ..., x - 1) points in the array on a guide line L, as long as a touch operation has been performed with respect to one of the touch areas 425, even if a touch operation is not performed on the other touch area 425. In this case, the guide displays may be updated by presenting both guide buttons 425n on the two guide lines L so that the operated guide button 425n is presented with dark hatching and the guide button 425n that did not pass the points is presented with light hatching. In this case, it is possible to reduce the amount of computation compared with the case in which the touch areas 425 are updated so as to prompt the next touch in accordance with operations to the two touch areas 425 respectively. Additionally, it is possible to present only one touch area 425 on the guidance screen.

However, when the time at which imaging by the camera 17 is to be started is determined on the basis of only the operation of a single guide line L, there is a possibility that states in which the hand orientation is not stable will be permitted. For this reason, it is preferable for multiple touch areas 425 to be presented on the guidance screen, and in particular, the determination of when to start imaging by the camera 17 is preferably made on the condition that touch operations are simultaneously performed with respect to multiple guide lines L.

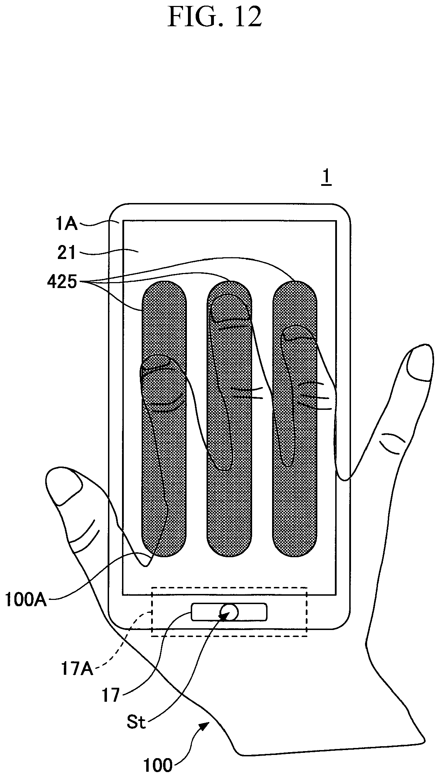

As illustrated in Fig. 12, it is possible to present three touch areas 425 vertically on a terminal device 1 that is arranged so as to be longer in the vertical direction. In this case, the user 100 simultaneously swipes the three touch areas 425 with the fingertips (in this example, the index finger, the middle finger and the ring finger), and during that time, the camera 17 images the palm 100A within the imaging range 17A. When the user 100 performs a simultaneous slide instruction across the touch areas 425 using multiple fingertips, the angle of the palm 100A with respect to the touch panel 18 remains stable and does not largely change while the multiple fingertips are simultaneously sliding over the touch panel 18. For this reason, it is possible to reduce relative angular deviation between the terminal device 1 and the hand of the user 100, thereby allowing the palm 100A to be stably imaged by the camera 17.

[BIOS Process]

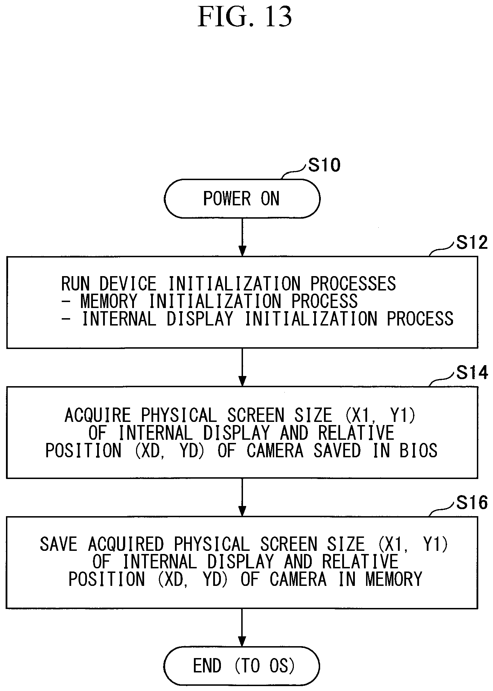

Next, an example of a BIOS process according to the present embodiment will be explained with reference to Fig. 13. Fig. 13 is a flow chart indicating an example of a BIOS process according to one embodiment. The BIOS process according to the present embodiment is performed, for example, by means of an initialization processing unit 32 and a registration unit 33 implemented in the BIOS 16a.

When the power supply of the terminal device 1 is turned on and the BIOS process is started (step S10), the initialization processing unit 32 executes initialization processes in the devices (step S12). The initialization processes of the devices include an initialization process for the memory 14 and an initialization process for the internal display 21.

Next, the registration unit 33 acquires the physical screen size (X1, Y1) of the internal display 21 and the relative position (XD, YD) of the camera 17 stored in the non-volatile memory 16 (step S14). Next, the registration unit 33 saves the acquired physical screen size (X1, Y1) and the relative position (XD, YD) of the camera 17 in the memory 14 (step S16). The BIOS procedure then ends and the procedure is transferred to the OS 15a.

[Display position Control Process]

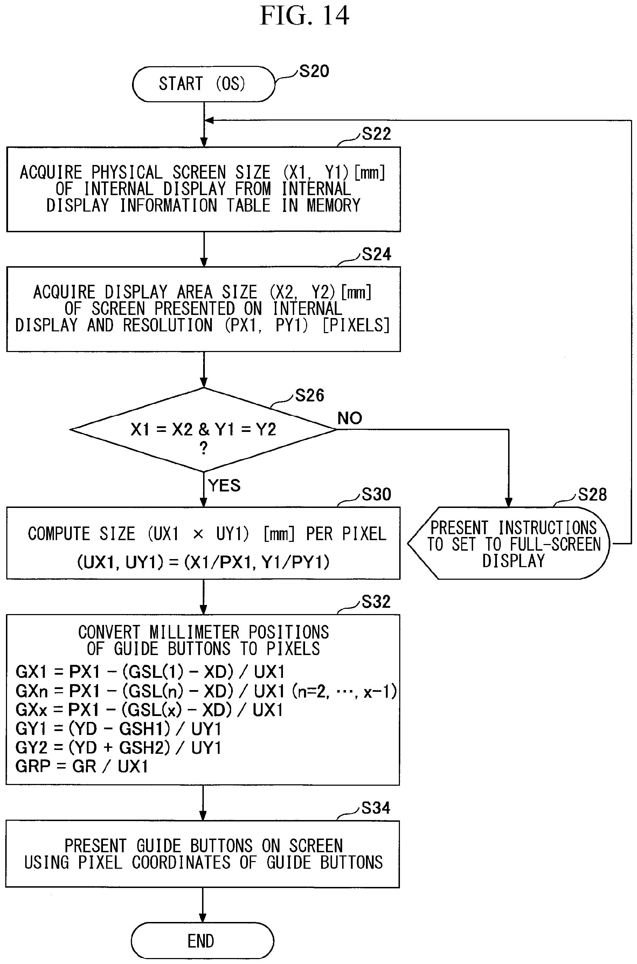

Next, an example of a display position control process according to the present embodiment will be explained with reference to Fig. 14. Fig. 14 is a flow chart indicating an example of the display position control process according to one embodiment. The display position control process according to the present embodiment is performed by an acquisition unit 34, a comparison unit 35, a computation unit 36 and a display unit 37 that are implemented, for example, as applications operating on the OS 15a.

When the BIOS process in Fig. 13 ends and the OS 15a is booted, the applications for executing the display position control process in accordance with the display position control program 40 are activated on the OS 15a, and the main process begins (step S20). The applications are controlled by the CPU 11.

The acquisition unit 34 acquires the physical screen size (X1, Y1, in millimeters) stored in the internal display information table 38 in the memory 14 (step S22). Next, the acquisition unit 34 acquires the display area size (X2, Y2, in millimeters) and the resolution (PX1, PY1, in pixels) of the screen of the internal display 21 from a standard API (Application Interface) of the OS 15a (step S24).

Next, the comparison unit 35 compares whether the physical screen size X1 on the X axis is equal to the display area size X2, on the X axis, of the screen that is being presented, and whether the screen size Y1 on the Y axis is equal to the display area size Y2, on the Y axis, of the screen that is being presented (step S26).

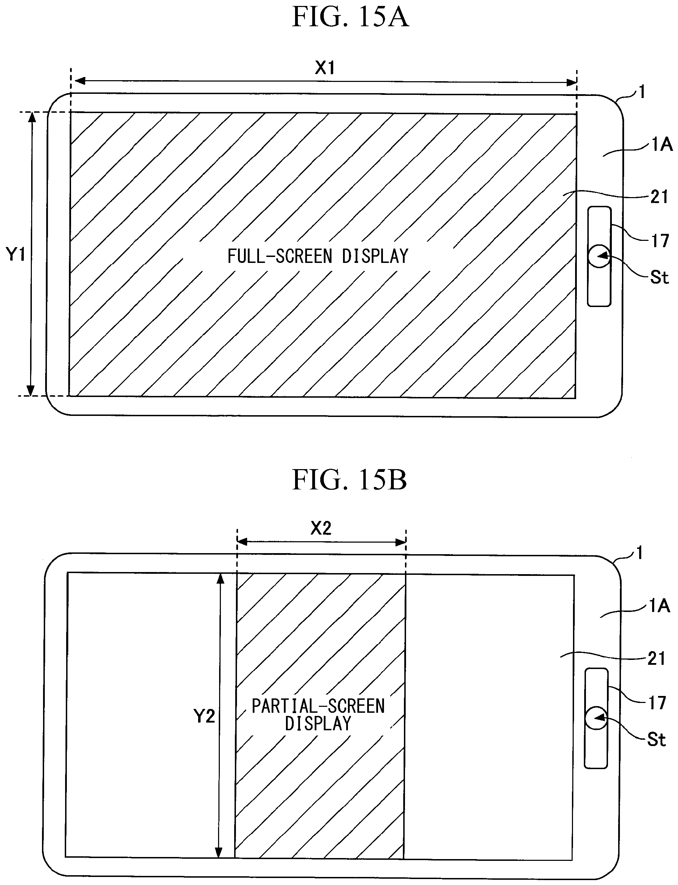

If, as a result of the comparison, the conditions in step S26 are not satisfied, then as shown, in one example, in Fig. 15, the physical screen size (X1, Y1) in (a) does not match the screen display area size (X2, Y2) in (b). In this case, the screen display area is not the full screen, so the guide displays in the touch areas 425 may be off the screen display area, so that parts of the touch areas 425 may not be shown. Therefore, if the conditions in step S26 are not satisfied, the display unit 37 presents a screen indicating that the display area of the display should be set to be the full screen (step S28), after which the procedure returns to step S22 and steps S22 to S26 are repeated.

If, as a result of the comparison in step S26, the conditions of step S26 are satisfied, then the computation unit 36 computes the size (UX1 × UY1, in millimeters) per pixel (step S30). The horizontal size UX1 per pixel is computed from X1/PX1, and the vertical size UY1 is computed from Y1/PY1.

Next, the computation unit 36 converts the millimeter positions of the guide buttons, i.e., the starting guide buttons 425S, the end guide buttons 425E and the guide buttons 425n, to positions in pixels. The computation unit 36 computes the positions (in pixels), on the X axis (horizontal axis), of GX1, GXn, GXx on the touch areas 425, when the upper left vertex of the internal display 21 shown in Fig. 8 is defined as being (0, 0), using the equations indicated below.

$$GX1 = PX1 - (GSL(1) - XD)/UX1$$

$$GXn = PX1 - (GSL(n) - XD)/UX1 \ (n = 2, ..., x - 1)$$

$$GXx = PX1 - (GSL(x) - XD)/UX1$$

Additionally, the computation unit 36 computes the positions (in pixels), on the Y axis (vertical axis), of GY1, GY2 on the two touch areas 425 shown in Fig. 8, and the radius (in pixels) of the guide buttons, using the equations indicated below.

$$GY1 = (YD - GSH1)/UY1$$

$$GY2 = (YD + GSH2)/UY1$$

$$GRP = GR/UX1$$

From the above, the computation unit 36 uses the preset display positions of the touch areas 425 for guiding the biometric information reading operations to compute the display positions of the touch areas 425 adapted to the physical screen size (X1, Y1), the relative position (XD, YD) of the camera 17 and the resolution (PX1, PY1) of the internal display 21. In other words, the computation unit 36 uses the resolution (PX1, PY1) of the internal display 21, the physical screen size (X1, Y1) and the relative position (XD, YD) of the camera 17 to convert the coordinates of the preset display positions of the touch areas 425 to pixels.

As a result, it is possible to present guidance screens having the touch areas 425 at the same position with respect to the reference point St of the camera 17 in any of multiple models of terminal devices 1 having different physical screen sizes. As a result, the camera 17 can correctly and stably capture multiple images of the palm of the hand by which biometric authentication is possible, in any of multiple models of terminal devices 1 having different screen sizes.

Next, the display unit 37 presents the guide buttons and the guide lines L at display positions obtained by converting, to pixels, the coordinates of the guide buttons, i.e. the starting guide buttons 425S, the end guide buttons 425E and the guide buttons 425n (step S34), and the present procedure ends.

The operations in the display position control implemented by the terminal device 1 according to the present embodiment have been explained above. As a result thereof, information including the resolution and the physical screen size of the display on which the touch areas 425 are presented, and the position (reference point St) of the camera 17 used for acquiring the biometric information, are acquired by an application on the OS 15a. Furthermore, based on the acquired information mentioned above, the coordinates of the display positions of the guide buttons of the touch areas 425 with respect to the reference point St are converted to pixels in accordance with the display being used.

While the information that is dependent on the display includes the display resolution, the physical screen size and the relative position of the camera 17, the resolution of the internal display 21 can be acquired by a standard API (Application Interface) of the OS 15a. Additionally, during an initialization process (during a POST process) in the terminal device 1, firmware (BIOS 16a) installed in the terminal device 1 saves the physical screen size of the internal display 21 and the relative position of the camera 17 to a memory 14 that can be accessed by an application. As a result thereof, applications on the OS 15a can read this information, and the coordinates of the display positions of the guide buttons of the touch areas 425, with respect to the reference point St, can be converted to pixels in accordance with the display. Additionally, the display positions of the guide buttons of the touch areas 425 with respect to the reference point St are fixed, and in the present embodiment, may be saved to the guide position information table 39 and stored in the HDD 15 or the memory 14.

As a result thereof, the information including the physical screen size of the internal display 21 and the relative position of the camera is saved, during the POST process, to the memory 14 that can be referenced by an application, and the application reads this information from the memory 14. Furthermore, the application converts the coordinates of the guide buttons in the touch areas 425 to pixels adapted to the physical screen size of the internal display 21 that is being used. As a result thereof, even with terminal devices 1 having difference displays, the touch areas 425 are presented at the same position relative to the reference point St. Additionally, the BIOS 16a saves the physical screen size of the internal display 21 of the terminal device 1 to the memory 14. For this reason, there is no need for the application to rewrite the internal display information table 38 for each terminal device 1. Additionally, at the same time, it is possible to prevent the touch areas 425 being presented at different positions relative to the reference point St due to neglecting to change the settings of the physical screen size and the relative position of the camera. Furthermore, since the user is not notified of the data structure and the location in the memory 14 at which this information is stored, it is possible to avoid the risk of the user mistakenly changing the physical screen size of the internal display 21 from the OS 15a.

In the above-described embodiment, specific coordinate conversion was performed for the touch areas 425 shown in Fig. 10. However, the specific screen is not limited to the guidance screen having the touch areas 425 illustrated in Fig. 11, and it is possible to use a guidance screen having the touch areas 425 illustrated in Fig. 11 or the touch areas 425 illustrated in Fig. 12. Additionally, the specific screen may be a screen other than the guidance screens having the touch areas 425 illustrated in Fig. 10 to Fig. 12.

While the terminal device, the display position control program and the display position control method have been explained by referring to embodiments above, the terminal device, the display position control program and the display position control method according to the present invention is not limited to the above-described embodiments, and various modifications and improvements are possible within the scope of the present invention. Additionally, when there are multiple embodiments and possible modifications, they may be combined within a range not contradicting each other.

Priority is claimed on Japanese Patent Application No. 2017-007706, filed January 19, 2017, the content of which is incorporated herein by reference.

[Reference Signs List]

| | |
|---|---|
| 1 | Terminal device |
| 11 | CPU |
| 12 | System controller |
| 13 | Graphics controller |
| 14 | Memory |
| 15 | HDD |
| 16 | Non-volatile memory |
| 17 | Camera |
| 18 | Touch panel |
| 19 | Internal LCD |
| 20 | Non-volatile memory |
| 21 | Internal display |
| 31 | Storage unit |
| 32 | Initialization processing unit |
| 33 | Registration unit |
| 34 | Acquisition unit |
| 35 | Comparison unit |
| 36 | Computation unit |
| 37 | Display unit |
| 38 | Internal display information table |
| 39 | Guide position information table |
| 40 | Display position control program |
| 41 | Biometric authentication device |
| 42 | Biometric imaging unit |
| 43 | Feature extraction unit |
| 44 | Authentication unit |
| 45 | Storage unit |
| 46 | Registration template |
| 425 | Touch area |
| 425S | Starting guide button |
| 425E | End guide button |
| 425n | Guide button |

**Claims**

1. A terminal device comprising:
   a computation unit that references a storage unit storing information including a size of a display being used and a reference point for presenting a specific screen, and that computes, from a preset display position of the specific screen, a display position of the specific screen adapted to each of information including the size of the display, the reference point and a resolution of the display being used.

2. The terminal device according to Claim 1, wherein:

   the reference point for presenting the specific screen represents a position of a biometric information reading device; and
   the preset display position of the specific screen represents a display position of a touch area for guiding a preset biometric information reading operation.

3. The terminal device according to Claim 2, comprising:

   a registration unit that registers, in the storage unit, information including a size of an internal display and a position of the reading device, during a BIOS process that is implemented when the terminal device is booted or rebooted; wherein
   the computation unit references the storage unit and computes, from the preset display position of the touch area, a display position of the touch area adapted to the information including the size of the internal display, the position of the reading device and the resolution of the display.

4. The terminal device according to Claim 2, comprising:

   a comparison unit that compares the size of the display with the size of a display area of the display being used; and
   a display unit that presents the touch area for guiding the biometric information reading operation at the computed touch area display position when, as a result of the comparison, the size of the display is the same as the size of the display area of the display being used.

5. The terminal device according to Claim 4, wherein:
   when, as a result of the comparison, the size of the display is different from the size of the display area of the display being used, then the display unit presents a screen indicating that the display area of the display being used should be set to be the full screen.

6. A display position control program for making a computer execute a process of:
   referencing a storage unit that stores information including a size of a display being used by a terminal device and a reference point for presenting a specific screen, and computing, from a preset display position of the specific screen, a display position of the specific screen adapted to information including the size of the display, the reference point and a resolution of the display being used.

7. The display position control program according to Claim 6, wherein:

   the reference point for presenting the specific screen is a position of a biometric information reading device; and
   the preset display position of the specific screen is a display position of a touch area for guiding a preset biometric information reading operation.

8. The display position control program according to Claim 7, comprising:

   registering, in the storage unit, information including a size of an internal display and a position of the reading device, during a BIOS process that is implemented when the terminal device is booted or rebooted; and
   referencing the storage unit and computing, from the preset display position of the touch area, a display position of the touch area adapted to the information including the size of the internal display, the position of the reading device and the resolution of the display.

9. The display position control program according to Claim 7, comprising:

   comparing the size of the display with the size of a display area of the display being used; and
   presenting the touch area for guiding the biometric information reading operation at the computed touch area display position if, as a result of the comparison, the size of the display is the same as the size of the display area of the display being used.

10. The display position control program according to Claim 9, comprising:
    presenting a screen indicating that the display area of the display being used should be set to be the full screen if, as a result of the comparison, the size of the display is different from the size of the display area of the display being used.

11. A display position control method in which a computer executes a process of:
referencing a storage unit that stores information including a size of a display being used by a terminal device and a reference point for presenting a specific screen, and computing, from a preset display position of the specific screen, a display position of the specific screen adapted to information including the size of the display, the reference point and a resolution of the display being used.

12. The display position control method according to Claim 11, wherein:

the reference point for presenting the specific screen is a position of a biometric information reading device; and
the preset display position of the specific screen is a display position of a touch area for guiding a preset biometric information reading operation.

13. The display position control method according to Claim 12, comprising:

registering, in the storage unit, information including a size of an internal display and a position of the reading device, during a BIOS process that is implemented when the terminal device is booted or rebooted; and
referencing the storage unit and computing, from the preset display position of the touch area, a display position of the touch area adapted to the information including the size of the internal display, the position of the reading device and the resolution of the display.

14. The display position control method according to Claim 12, comprising:

comparing the size of the display with the size of a display area of the display being used; and
presenting the touch area for guiding the biometric information reading operation at the computed touch area display position if, as a result of the comparison, the size of the display is the same as the size of the display area of the display being used.

15. The display position control method according to Claim 14, comprising:
presenting a screen indicating that the display area of the display being used should be set to be the full screen if, as a result of the comparison, the size of the display is different from the size of the display area of the display being used.

# FIG. 1

(1) PLEASE PLACE YOUR FINGERS
    ON THE CIRCLES

425S

425

L

425E

PLEASE SLIDE YOUR
FINGERS THREE MORE TIMES

① ② ③

(2) PLEASE SLIDE YOUR
    FINGERS TO THE RIGHT

425S

425

L

425E

SEE INSTRUCTIONS

CANCEL

1

1A

21

17

St

FIG. 2

# FIG. 3

EP 3 573 017 A1

# FIG. 4

# FIG. 5

38

| | |
|---|---|
| CAMERA POSITION (HORIZONTAL) | XD |
| CAMERA POSITION (VERTICAL) | YD |
| HORIZONTAL WIDTH OF INTERNAL DISPLAY | X1 |
| VERTICAL WIDTH OF INTERNAL DISPLAY | Y1 |

# FIG. 6

39

| | |
|---|---|
| UPPER GUIDE LINE Y COORDINATE | GSH1 |
| LOWER GUIDE LINE Y COORDINATE | GSH2 |
| GUIDE BUTTON X ARRAY POSITION (1) | GSL(1) |
| GUIDE BUTTON X ARRAY POSITION (n) (n=2, 3, ..., x-1) | GSL(n) |
| GUIDE BUTTON X ARRAY POSITION (x) | GSL(x) |
| GUIDE BUTTON RADIUS | GR |

# FIG. 7

EP 3 573 017 A1

FIG. 8

EP 3 573 017 A1

# FIG. 9

EP 3 573 017 A1

# FIG. 10

EP 3 573 017 A1

## FIG. 11

# FIG. 12

# FIG. 13

S10

POWER ON

S12

RUN DEVICE INITIALIZATION PROCESSES
- MEMORY INITIALIZATION PROCESS
- INTERNAL DISPLAY INITIALIZATION PROCESS

S14

ACQUIRE PHYSICAL SCREEN SIZE (X1, Y1)
OF INTERNAL DISPLAY AND RELATIVE
POSITION (XD, YD) OF CAMERA SAVED IN BIOS

S16

SAVE ACQUIRED PHYSICAL SCREEN SIZE (X1, Y1)
OF INTERNAL DISPLAY AND RELATIVE
POSITION (XD, YD) OF CAMERA IN MEMORY

END (TO OS)

# FIG. 14

START (OS) ─ S20

↓

ACQUIRE PHYSICAL SCREEN SIZE (X1, Y1) [mm]
OF INTERNAL DISPLAY FROM INTERNAL
DISPLAY INFORMATION TABLE IN MEMORY ─ S22

↓

ACQUIRE DISPLAY AREA SIZE (X2, Y2) [mm]
OF SCREEN PRESENTED ON INTERNAL
DISPLAY AND RESOLUTION (PX1, PY1) [PIXELS] ─ S24

↓

X1 = X2 & Y1 = Y2 ? ─ S26

NO → PRESENT INSTRUCTIONS TO SET TO FULL-SCREEN DISPLAY ─ S28

YES ↓

COMPUTE SIZE (UX1 × UY1) [mm] PER PIXEL

$(UX1, UY1) = (X1/PX1, Y1/PY1)$ ─ S30

↓

CONVERT MILLIMETER POSITIONS
OF GUIDE BUTTONS TO PIXELS

$GX1 = PX1 - (GSL(1) - XD) / UX1$
$GXn = PX1 - (GSL(n) - XD) / UX1 \ (n=2, \cdots, x-1)$
$GXx = PX1 - (GSL(x) - XD) / UX1$
$GY1 = (YD - GSH1) / UY1$
$GY2 = (YD + GSH2) / UY1$
$GRP = GR / UX1$ ─ S32

↓

PRESENT GUIDE BUTTONS ON SCREEN
USING PIXEL COORDINATES OF GUIDE BUTTONS ─ S34

↓

END

## FIG. 15A

X1

1

1A

21

17

St

Y1

FULL-SCREEN DISPLAY

## FIG. 15B

X2

1

1A

21

17

St

Y2

PARTIAL-SCREEN
DISPLAY

## INTERNATIONAL SEARCH REPORT

| International application No. |
| --- |
| PCT/JP2018/000940 |

| A. CLASSIFICATION OF SUBJECT MATTER |
| --- |
| Int. Cl. G06T1/00(2006.01)i, G06F3/0488(2013.01)i |

According to International Patent Classification (IPC) or to both national classification and IPC

| B. FIELDS SEARCHED |
| --- |
| Minimum documentation searched (classification system followed by classification symbols)<br>Int. Cl. G06T1/00, G06F3/0488 |

Documentation searched other than minimum documentation to the extent that such documents are included in the fields searched
Published examined utility model applications of Japan     1922-1996
Published unexamined utility model applications of Japan   1971-2018
Registered utility model specifications of Japan           1996-2018
Published registered utility model applications of Japan   1994-2018

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| Y<br>A | JP 2006-260021 A (FUJI XEROX CO., LTD.) 28 September 2006, paragraphs [0031]-[0033] (Family: none) | 1, 6, 11<br>2-5, 7-10, 12-15 |
| Y<br>A | JP 2008-261946 A (SHARP CORP.) 30 October 2008, paragraphs [0054]-[0057] (Family: none) | 1, 6, 11<br>2-5, 7-10, 12-15 |

☒ Further documents are listed in the continuation of Box C.  ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| | |

| Name and mailing address of the ISA/<br>   Japan Patent Office<br>   3-4-3, Kasumigaseki, Chiyoda-ku,<br>   Tokyo 100-8915, Japan | Authorized officer<br><br>Telephone No. |
| --- | --- |

Form PCT/ISA/210 (second sheet) (January 2015)

**INTERNATIONAL SEARCH REPORT**

| International application No. |
| --- |
| PCT/JP2018/000940 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2016-212636 A (FUJITSU LTD.) 15 December 2016, entire text, all drawings & US 2016/0328597 A1, whole document & EP 3091480 A1 | 1-15 |
| A | WO 2013/145491 A1 (NIPPON ELECTRIC CO.) 03 October 2013, entire text, all drawings (Family: none) | 1-15 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016212636 A
- JP 2017007706 A